# EUROPEAN PATENT APPLICATION

(11) **EP 4 792 943 A1**
(43) Date of publication of application: **19.08.2026**
(21) Application number: 24895785.4
(22) Date of filing: 19.08.2024
(51) Int. Cl.: B05C 11/00, H04N 23/695, F16M 13/02, F16M 11/04, F16M 11/06

(54) **COATING TEST DEVICE AND COATING SYSTEM**

(30) Priority: 29.11.2023 CN 202311606483
(71) Applicant: Contemporary Amperex Technology Co., Limited, Ningde, Fujian 352100 (CN)
(72) Inventor: ZHANG, Zhipeng, Ningde, Fujian 352100 (CN); JIANG, Ping, Ningde, Fujian 352100 (CN); WU, Hanguo, Ningde, Fujian 352100 (CN)
(74) Representative: Lorenz Seidler Gossel Part. mbB
(86) International application number: PCT/CN2024/113162
(87) International publication number: WO 2025/112684

(57) **Abstract**

A coating test device and a coating system. The coating test device comprises a main support (110) and two test assemblies (120) assembled on the main support (110). Each test assembly (120) comprises: a macro camera (121) and a roller (122); the roller (122) is used for conveying a material belt (130); the two test assemblies (120) are respectively used for testing two opposite surfaces of the material belt (130); the macro camera (121) in each test assembly (120) is arranged corresponding to the roller (122); and the width of a lens of the macro camera (121) is greater than or equal to the width of the corresponding roller (122). The coating test device can be suitable for testing material belts having various widths, and also reduces adjustment and debugging of macro cameras.

## Description

### TECHNICAL FIELD

The present application relates to the technical field of vision testing, and specifically relates to a coating test apparatus and a coating system. The present application claims the priority of the Chinese patent application with the application number 202311606483.5 and the title of "COATING TEST APPARATUS AND COATING SYSTEM" filed with China Patent Office on November 29, 2023, the entire contents of which are incorporated herein by reference.

### BACKGROUND

Coating refers to a method of applying a paste-like polymer, molten polymer, or polymer solution onto paper, cloth, or plastic film to produce composite materials (films). For example, coating electrode plates of a lithium battery is mainly to evenly apply a slurry with good stability, viscosity, and flowability onto positive and negative electrode fluid. Electrode coating is of great significance for the battery capacity, consistency, and safety of the lithium battery.

The coating process generally includes a coating effect test procedure, which is an important part of the coating process. In the related technology, a coating effect test apparatus includes: a main support, and a roller holder, a roller, a light source assembly, a camera support, and a camera assembly which are mounted on the main support. The roller holder is configured to mount the roller that is configured to transport a material belt, and the light source assembly is configured to illuminate the material belt. Camera assemblies are installed on both sides of the material belt to test the coating effect, and the camera assemblies are mounted on the camera support. Each camera assembly generally includes two cameras which are configured to test the entire width of the material belt by debugging.

However, the on-site installation of this coating effect test apparatus requires a large amount of work and a high number of on-site installation personnel. In addition, image debugging and camera calibration are required for the camera components, which involves a large amount of debugging work and places high skill requirements on the on-site installation and debugging personnel.

### SUMMARY OF THE INVENTION

In view of above problems, the embodiments of the present application provide a coating test apparatus and a coating system, aiming to solve at least the problems in the related technology that the on-site installation of a coating effect test apparatus involves a large workload, requires a large number of on-site installation personnel, has a high amount of debugging work, and demands high skill levels from on-site installation and debugging personnel.

In one aspect, the embodiments of the present application provide the coating test apparatus, which includes a main support and two test assemblies assembled on the main support; each test assembly includes: a macro camera and a roller; the roller is configured to convey a material belt; the two test assemblies are respectively configured to test two opposite surfaces of the material belt; and the macro camera in each test assembly is arranged corresponding to the roller, and a width of a lens of the macro camera is greater than or equal to the width of the corresponding roller.

According to the coating test apparatus provided by the embodiments of the present application, the macro cameras are configured to test the material belt of the material to be tested; because it needs the macro cameras to be close to the material belt, the macro cameras can be directly erected on the main support, thus avoiding the installation of camera supports; meanwhile, the installation of a light source assembly can also be avoided, and therefore, the arrangement of wires can be reduced; and in addition, the test assemblies are assembled compactly, such that the space occupied by the coating test apparatus can be reduced. The coating test apparatus includes the two test assemblies, each test assembly includes one macro camera and the corresponding roller, the macro camera is arranged corresponding to the roller, the width of the lens of each macro camera is greater than or equal to the width of the corresponding roller, therefore, it is applicable to test of the material belts with various widths; and in addition, the adjustment and debugging on the macro cameras can be reduced, thus the on-site installation workload and on-site installation personnel are decreased, and moreover, the requirement for the skill levels of the on-site installation and debugging personnel can be reduced.

In one possible embodiment, adjusting mechanisms are respectively arranged at two ends of the macro camera and are configured to adjust the two ends of the macro camera to be at the same distance, the same height, and the same inclination angle from the corresponding roller. In this way, it can ensure that the whole macro camera has an ideal observation field line for the material belt.

In one possible embodiment, the adjusting mechanism includes a connecting assembly and a base; the connecting assembly is connected to the end surface of the macro camera; the base is arranged on the main support; the connecting assembly is slidably arranged on the base, with a sliding direction perpendicular to an axial direction of the roller corresponding to the macro camera; a first scale is arranged on one of the base and the connecting assembly, while a first pointer is arranged on the other one of the base and the connecting assembly and is corresponding to the first scale; and the first pointer and the first scale are configured to indicate a sliding distance of the connecting assembly on the base.

On the basis of the first pointer and the first scale, the two ends of the macro camera can be adjusted to be at the same distance from the roller without specific skill requirements, so that the whole macro camera is at the same distance from the roller, the optimal observation field of the macro camera on the material belt is guaranteed, and the skill requirements on on-site installation personnel can be further reduced.

In one possible embodiment, the coating test apparatus further includes a first bolt; a connecting seat is arranged on the base; a first connecting hole is formed in the connecting seat; a second connecting hole is formed in the connecting assembly; a central connecting line between the first connecting hole and the second connecting hole is parallel to the sliding direction of the connecting assembly; and the first bolt connects the first connecting hole with the second connecting hole.

The first bolt can be screwed to drive the connecting assembly to move the macro camera close to or far away from the roller, so as to easily adjust the position of the macro camera. In addition, if the first bolt is not screwed, the connecting assembly and the base can be fixed by the first bolt to ensure the fixed position between the connecting assembly and the base.

In one possible embodiment, a slide rail is arranged on one of the base and the connecting assembly, an extending direction of the slide rail is perpendicular to the axial direction of the roller corresponding to the macro camera; and a slide is formed in the other one of the base and the connecting assembly and is in match with the slide rail.

Due to the cooperation between the slide rail and the slide, a sliding friction force of the connecting assembly on the base can be reduced, and the connecting assembly are prevented from being stuck during sliding. In addition, the connecting assembly can drive the macro camera to move in a specific direction so as to guarantee that the macro camera is adjusted to be at the optimal observation field angle from the material belt.

In one possible embodiment, the connecting assembly includes a first connecting member and a second connecting member; the end surface of the macro camera is rotatably connected to the first connecting member, the first connecting member is connected to the second connecting member, and the second connecting member is slidably arranged on the base; a second scale is arranged on one of the end surface of the macro camera and the first connecting member, while a second pointer is arranged on the other one of the end surface of the macro camera and the first connecting member and is corresponding to the second scale; and the second pointer and the second scale are configured to indicate a rotating angle of the macro camera relative to the first connecting member.

On the basis of the second pointer and the second scale, the two ends of the macro camera can be adjusted to be at the same distance from the roller without specific skill requirements, so that the whole macro camera is at the same distance from the roller, the optimal observation field of the macro camera on the material belt is guaranteed, and the skill requirements on on-site installation personnel can be further reduced.

In one possible embodiment, the coating test apparatus further includes a second bolt; a fixing hole is formed in the first connecting member, and the second bolt passes through the fixing hole and is connected to the macro camera.

After the inclination angle of the micro camera relative to the roller is set, the second bolt can be inserted into the fixing hole and connected to the micro camera, the second bolt is screwed to enable a friction force large enough to exist between the micro camera and the first connecting member, which prevents the micro camera from rotating relative to the first connecting member, thereby fixing the first connecting member and the micro camera.

In one possible embodiment, the fixing hole is in an arc shape, and the second bolt is slidably arranged in the fixing hole.

If it is needed to set the inclination angle of the micro camera, the second bolt can be slightly unscrewed, then the micro camera is rotated, at the moment, the second bolt can slide in the arc-shaped fixing hole; and after the inclination angle of the micro camera is set, the second bolt is screwed again to fix the micro camera and the first connecting member. In this way, it is not needed to disassemble the second bolt, thus preventing the second bolt from being lost.

In one possible embodiment, the first connecting member is slidably arranged on the second connecting member, with the sliding direction perpendicular to the base; a third scale is arranged on one of the first connecting member and the second connecting member, while a third pointer is arranged on the other one of the first connecting member and the second connecting member and is corresponding to the third scale; and the third pointer and the third scale are configured to indicate a vertical movement distance of the micro camera relative to the base.

On the basis of the third pointer and the third scale, the two ends of the macro camera can be adjusted to be at the same distance from the roller without specific skill requirements, so that the whole macro camera is at the same distance from the roller, the optimal observation field of the macro camera on the material belt is guaranteed, and the skill requirements on on-site installation personnel can be further reduced.

In one possible embodiment, the coating test apparatus further includes a third bolt; a third connecting hole is formed in the first connecting member, and a fourth connecting hole is formed in the second connecting member; a center connecting line between the third connecting hole and the fourth connecting hole is perpendicular to the base; and the third bolt connects the third connecting hole with the fourth connecting hole.

The third bolt can be screwed to drive the first connecting member to adjust the micro camera in a height direction. In addition, if the third bolt is not screwed, the first connecting member and the second connecting member can be fixed by the third bolt to ensure the fixed position between the first connecting member and the second connecting member.

In one possible embodiment, the main support is provided with a first platform and a second platform which are arranged in parallel and stacked from bottom to top; the two test assemblies are respectively arranged on the first platform and the second platform, and the rollers in the two test assemblies are arranged in a staggered manner, and vertical tangent planes of the rollers in the two test assemblies are located on the same vertical plane.

The two rollers are arranged in the staggered manner, such that two micro cameras can be conveniently assembled corresponding to two surfaces of the material belt. The vertical tangent planes of the two rollers are located on the same lead hammer face, which avoids the interference of the material belt with the positions of the micro cameras, makes the whole coating test apparatus more compact, and reduces the space occupied by the coating test apparatus.

In one possible embodiment, an avoidance port is formed in the second platform and configured to avoid the material belt.

In one possible embodiment, the coating test apparatus further includes an encoder assembly which is arranged on the main support and configured to provide a signal for triggering the macro cameras to work.

In one possible embodiment, the coating test apparatus further includes a roller holder which is arranged on the main support; and the roller is arranged on the roller holder.

The roller holder can be configured to support and fix the roller so as to guarantee the stability of the roller during operating.

In one possible embodiment, the coating test apparatus further includes mounting feet; and the mounting feet are arranged at the bottom of the main support and are configured to fix the main support on a target object.

During the operating of the coating test apparatus, vibration is unavoidable; the mounting feet can be configured to fix the main support on the target object so that the shaking of the coating test apparatus is reduced and vibration abnormal sounds are reduced.

In another aspect, the embodiments of the present application further provide the coating system, which includes coating apparatuses, a drying oven apparatus, a material recovery apparatus, and the coating test apparatus; and the coating test apparatus is arranged between the coating apparatuses and the material recovery apparatus.

According to the coating system provided by the embodiments of the present application, the macro cameras of the coating test apparatus are configured to test the material belt of the material to be tested; because it needs the macro cameras to be close to the material belt, the macro cameras can be directly erected on the main support, thus avoiding the installation of camera supports; meanwhile, the installation of a light source assembly can also be avoided, and therefore, the arrangement of wires can be reduced; and in addition, the test assemblies are assembled compactly, such that the space occupied by the coating test apparatus can be reduced. The coating test apparatus includes the two test assemblies, each test assembly includes one macro camera and the corresponding roller, the macro camera is arranged corresponding to the roller, the width of the lens of each macro camera is greater than or equal to the width of the corresponding roller, therefore, it is applicable to test of the material belts with various widths; and in addition, the adjustment and debugging on the macro cameras can be reduced, thus the on-site installation workload and on-site installation personnel are decreased, and moreover, the requirement for the skill levels of the on-site installation and debugging personnel can be reduced.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### BRIEF DESCRIPTION OF THE DRAWINGS

FIG. 1 is a schematic structural diagram of a coating test apparatus for a lithium battery in a related technology;
FIG. 2 is a schematic diagram of debugging of a camera assembly in FIG. 1;
FIG. 3 is a schematic structural diagram of a coating test apparatus provided by one embodiment of the present application;
FIG. 4 is a side view of a coating test apparatus in FIG. 3;
FIG. 5 is a top view of a coating test apparatus provided by one embodiment of the present application;
FIG. 6 is a schematic diagram of an ideal view field and a non-ideal view field of a material belt in a coating test;
FIG. 7 is a schematic structural diagram of an adjusting mechanism provided by one embodiment of the present application;
FIG. 8 is a schematic diagram of a first scale provided by one embodiment of the present application;
FIG. 9 is a schematic diagram of a second scale provided by one embodiment of the present application;
FIG. 10 is a schematic diagram of a third scale provided by one embodiment of the present application; and
FIG. 11 is a schematic diagram of a coating system provided by one embodiment of the present application.

### Reference numerals:

1-coating test apparatus for lithium battery; 2-main bracket; 3-roller holder; 4-roller;
5-light source assembly; 6-camera support; 7-camera assembly; 8-material belt;
100-coating test apparatus; 110-main support;
120-test assembly; 121-macro camera; 1211-second scale;
122-roller; 1221-roller holder;
130-material belt; 1301-first surface; 1302-second surface; 1303-horizontal line; 1304-inclination line;
140-adjusting mechanism; 141-connecting assembly; 1411-first connecting member; 14111-second pointer; 14112-fixing hole;
14113-third pointer; 1412-second connecting member; 14121-first pointer; 14122-third scale;
142-base; 1421-first scale; 1422-connecting seat; 1423-slide rail;
150-first bolt; 160-second bolt; 170-third bolt;
181-first platform; 1811-avoidance port; 182-second platform;
183-encoder assembly; 190-mounting foot;
200-coating system; 210-coating apparatus; 220-drying oven apparatus; and 230-material recovery apparatus.

### DETAILED DESCRIPTION

The embodiments of the technical solutions of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For ordinary technicians in this field, the specific meanings of the above terms in the embodiments of the present application can be understood according to the specific circumstances. The specific embodiments described herein are only used to explain the present invention and are not intended to limit the present invention.

Coating technology is a process for applying one or more layers of liquid onto a substrate on the basis of a study on fluid properties, and the substrate is usually a flexible film or liner, and the coated liquid layer is then processed by a drying oven or curing process to form a film with special functions. The coating technology is applied in various industries, such as printing, food packaging, medical, and batteries. A coating test apparatus provided by the embodiments of the present application can be used in various industries related to the coating industry; and in the embodiments of the present application, it is described with the battery industry as the background.

The main purpose of coating lithium batteries is to evenly apply a slurry with good stability, viscosity, and fluidity onto positive electrode and negative electrode fluids; and electrode coating is of great significance to the battery capacity, consistency, and safety of lithium batteries. In the coating process, it generally includes a coating effect test step, namely, the coating effect test step is a type of performance check performed after applying a liquid coating onto the substrate.

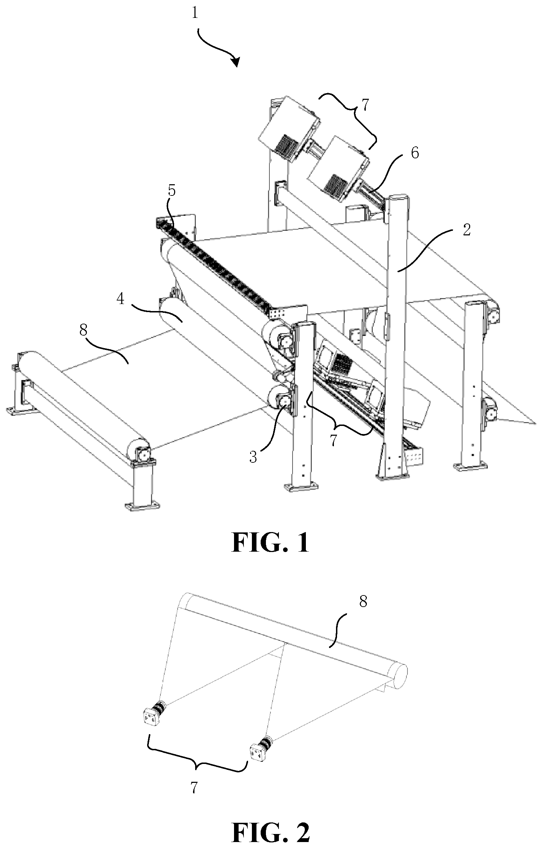

FIG. 1 is a schematic structural diagram of a coating test apparatus 1 for a lithium battery in the related technology, with reference to FIG. 1, in the related technology, the coating test apparatus 1 for a lithium battery includes a main bracket 2, and roller holders 3, rollers 4, a light source assembly 5, a camera support 6, and camera assemblies 7 which are assembled on the main support 2; the rollers 4 are assembled on the roller holders 3, and are configured to convey a material belt 8 (a material to be tested); and the light source assembly 5 lights the material belt 8. The camera assemblies 7 are respectively assembled on two surfaces of the material belt, and are configured to test the effect of the material belt 8 after being coated; and the camera assemblies 7 are assembled on the camera support 6. With the development of the battery industry, the width of battery electrode plates increases, each camera assembly 7 generally includes two or more cameras (in the figure, the camera assemblies 7 include two cameras for example), and the two cameras are configured to test the whole width of the material belt by debugging.

The camera assemblies 7 are far away from the material belt 8 of the material to be tested, so it is needed to calibrate and debug the two cameras. FIG. 2 is a schematic diagram of debugging of the camera assemblies 7 in FIG. 1, and as shown in FIG. 2, during calibrating and debugging the camera assemblies 7, it is needed to debug view fields of the two cameras to cover the whole width of the material belt 8, and the view field overlapping area of the two cameras cannot be overlarge. In such case, the skill requirements for on-site installation and debugging personnel are relatively high.

Moreover, the abovementioned coating test apparatus for a lithium battery requires the installation of the light source assembly 5 and the camera support 6, and also requires the layout of wiring for the light source assembly 5 and the camera assemblies 7, resulting in large on-site installation workload and requiring a large number of on-site installation personnel.

In order to solve above problems, the embodiments of the present application provide a coating test apparatus and a coating system; the macro cameras of the coating test apparatus are configured to test the material belt of the material to be tested; because it needs the macro cameras to be close to the material belt, the macro cameras can be directly erected on a main support, thus avoiding the installation of camera supports; meanwhile, the installation of the light source assembly can also be avoided, and therefore, the arrangement of wires can be reduced. The coating test apparatus provided by the embodiment of the present application includes the two test assemblies; each test assembly includes the macro camera and the roller, the macro cameras are arranged corresponding to the rollers, the width of the lens of each macro camera is greater than or equal to the width of the corresponding roller, therefore, it is applicable to test of the material belts with various widths; and in addition, the adjustment and debugging on the macro cameras can be reduced, thus the on-site installation workload and on-site installation personnel are decreased, and moreover, the requirement for the skill levels of the on-site installation and debugging personnel can be reduced.

The coating test apparatus and the coating system provided by the embodiments of the present application are described in detail below with reference to the accompanying drawings and specific embodiments.

First, a brief explanation is made for the macro cameras: the macro camera is a type of camera that needs to shorten the focal length of the lens to a very short distance for very small objects, such as bacteria or flowers. "Macro" means shooting at a very high magnification from a close distance. According to commonly used industrial standards, an imaging ratio greater than 1:1 is called macro photography.

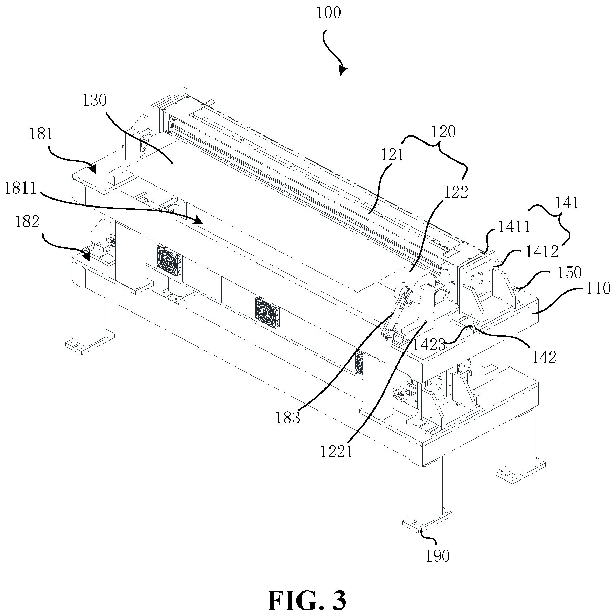

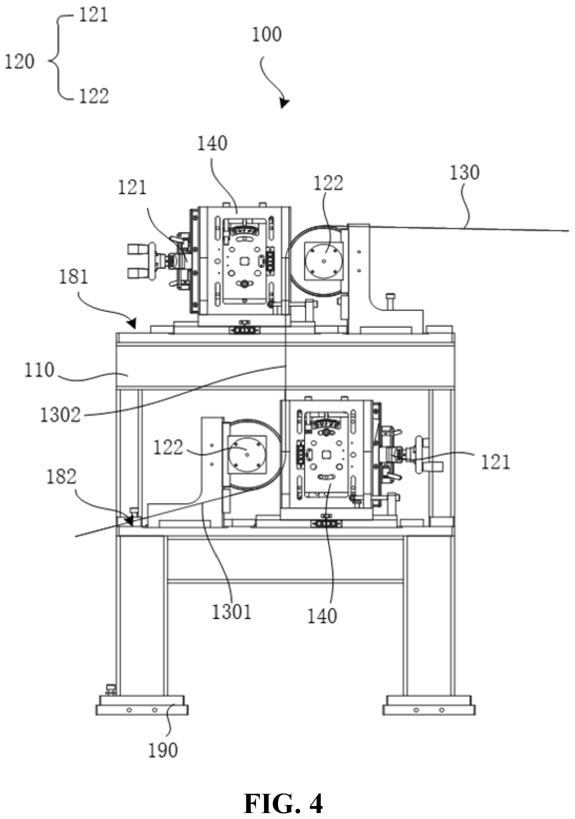

FIG. 3 is a schematic structural diagram of the coating test apparatus 100 provided by the embodiment of the present application, FIG. 4 is a side view of the coating test apparatus 100 in FIG. 3, and as shown in FIG. 3 and FIG. 4, the coating test apparatus 100 provided by the embodiments of the present application includes a main support 110 and the two test assemblies 120 assembled on the main support 110.

Specifically, each test assembly 120 includes a macro camera 121 and a roller 122; the roller 122 is configured to convey the material belt 130 of the material to be tested; the two test assemblies 120 are respectively configured to test two opposite surfaces of the material belt 130; by way of example, as shown in FIG. 4, the main support 110 is provided with an upper layer and a lower layer, the two test assemblies 120 are respectively arranged on the upper layer and the lower layer, and the two macro cameras 121 and the two rollers 122 are oppositely arranged and staggered on the upper layer and the lower layer, thus the macro camera 121 on the lower layer of the main support 110 can test a first surface 1301 of the material belt 130, and the macro camera 121 on the upper layer of the main support 110 can test a second surface 1302 of the material belt 130.

The macro camera 121 in each test assembly 120 is arranged corresponding to the roller 122, and the width of the lens of the macro camera 121 is greater than or equal to the width of the corresponding roller 122. The width of the lenses of the macro cameras 121 and the width of the rollers 122 are defined corresponding to the width of the material belt 130, and it is to be understood that the width direction of the lenses of the macro cameras 121 is the width direction of the conveyed material belt 130, and the width direction of the rollers 122 is also the width direction of the conveyed material belt 130.

It is to be understood that according to the coating test apparatus 100 provided by the embodiments of the present application, the macro cameras 121 are configured to test the material belt 130 of the material to be tested; because it needs the macro cameras 121 to be close to the material belt 130, the macro cameras 121 can be directly erected on the main support 110, thus avoiding the installation of camera supports; meanwhile, the installation of the light source assembly can also be avoided, and therefore, the arrangement of wires can be reduced; and in addition, the test assemblies 120 are assembled compactly, such that the space occupied by the coating test apparatus 100 can be reduced. The coating test apparatus 100 includes the two test assemblies 120, each test assembly 120 includes one macro camera 121 and the corresponding roller 122, the macro camera 121 is arranged corresponding to the roller 122, the width of the lens of each macro camera 121 is greater than or equal to the width of the corresponding roller 122, therefore, it is applicable to test of the material belts 130 with various widths; and in addition, the adjustment and debugging on the macro cameras 121 can be reduced, thus the on-site installation workload and on-site installation personnel are decreased, and moreover, the requirement for the skill levels of the on-site installation and debugging personnel can be reduced.

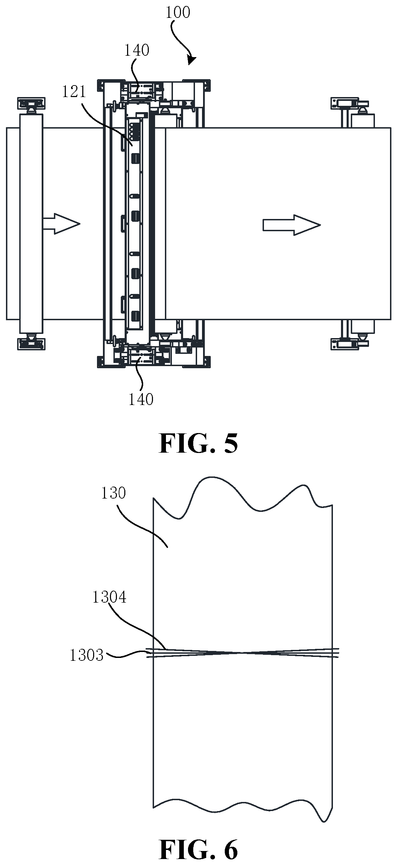

The present application is more than that, FIG. 5 is a top view of the coating test apparatus 100 provided by one embodiment of the present application, as shown in FIG. 4 and FIG. 5, in some embodiments of the present application, adjusting mechanisms 140 can be arranged at two ends of the macro camera 121, namely, the adjusting mechanisms 140 are respectively arranged at two ends of each macro camera 121 and are configured to adjust the two ends of the macro camera 121 to be at the same distance, the same height, and the same inclination angle from the corresponding roller 122.

During observing the material belt 130, it is needed to adjust the macro cameras 121 to ideal positions to ensure that the macro cameras 121 have an optimal test view field for the material belt 130; FIG. 6 is a schematic diagram of an ideal view field line and a non-ideal view field line for the material belt 130 in a coating test, as shown in FIG. 6, a horizontal line 1303 in FIG. 6 indicates the ideal view field line of the macro cameras 121 for the material belt 130, and an inclination line 1304 indicates the non-ideal view field line of the macro cameras 121 for the material belt 130. It is needed to adjust the macro camera 121 to the ideal positions to achieve ideal view field line as indicated by the horizontal line 1303 in FIG. 6 for the material belt 130.

In the embodiment of the present application, the adjusting mechanisms 140 are respectively arranged at the two ends of the macro camera 121 and are capable of adjusting the two ends of the macro camera 121 to be at the same distance from the corresponding roller 122, thus ensuring that the whole macro camera 121 has the same distance from the corresponding roller 122. The two adjusting mechanisms 140 at the two ends of the macro camera 121 are capable of adjusting the two ends of the macro camera 121 to be at the same height from the corresponding roller 122, thus ensuring that the whole macro camera 121 has the same height from the corresponding roller 122. The two adjusting mechanisms 140 at the two ends of the macro camera 121 are capable of adjusting the two ends of the macro camera 121 to be at the same inclination angle from the corresponding roller 122, thus ensuing the whole macro camera 121 has the same inclination angle from the corresponding roller 122. In conclusion, the whole macro cameras 121 have the ideal test visual line for the material belt 130.

The adjusting mechanisms 140 can be electronically adjusted or manually adjusted as shown in the following. Compared with the electronic adjusting mode, the manual adjusting mode can save the manufacturing cost of the whole coating test apparatus 100.

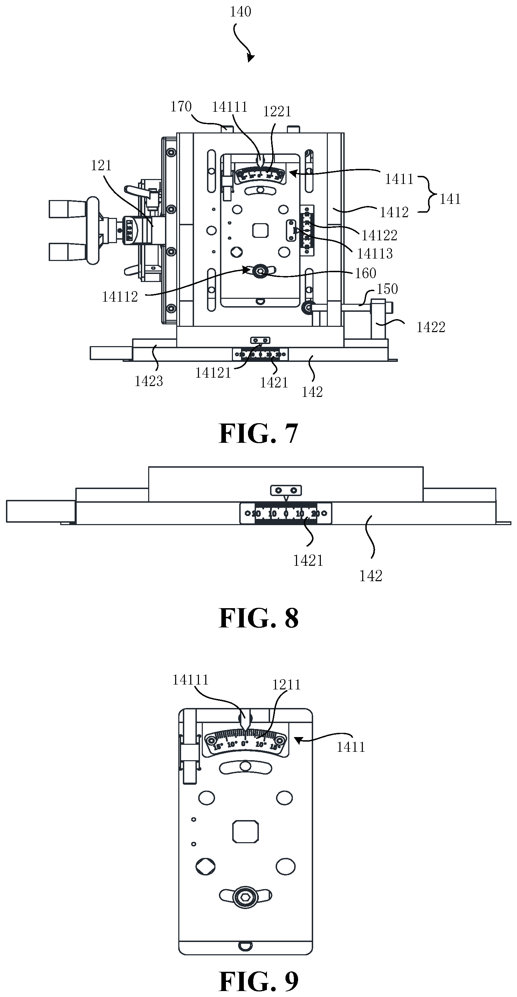

FIG. 7 is a schematic structural diagram of the adjusting mechanisms 140 provided by one embodiment of the present application, with reference to FIG. 7 and in cooperation with FIG. 4, in some embodiments of the present application, the adjusting mechanism 140 can include a connecting assembly 141 and a base 142; the connecting assembly 141 is connected to the end surface of the macro camera 121; and the connecting assembly 141 and the base 142 can be used as fixing apparatuses for the macro camera 121.

Specifically, the base 142 is arranged on the main support 110, the connecting assembly 141 is slidably arranged on the base 142, with a sliding direction perpendicular to an axial direction of the roller 122 corresponding to the macro camera 121, namely, end portions of the macro camera 121 can be close to or away from the roller 122 by means of the sliding of the connecting assembly 141 on the base 142.

A first scale 1421 is arranged on one of the base 142 and the connecting assembly 141, while a first pointer 14121 is arranged on the other one of the base 142 and the connecting assembly 141. By way of example, taking the first pointer 14121 arranged on the connecting assembly 141 and the first scale 1421 arranged on the base 142 as an example, the first pointer 14121 and the first scale 1421 are correspondingly arranged. It is to be understood that the first pointer 14121 and the first scale 1421 which are respectively located on the connecting assembly 141 and the base 142 that can move relatively can indicate the sliding distance of the connecting assembly 141 on the base 142. According to the sliding distance, the adjusting mechanisms 140 at the two ends of the macro camera 121 can be configured to adjust the two ends of the macro camera 121 to be at the same distance from the roller 122 so that the whole macro camera 121 can be at the same distance from the roller 122, and therefore the optimal test view field of the macro camera 121 to the material belt 130 can be guaranteed.

As shown in FIG. 7 and FIG. 8, in some embodiments of the present application, a plurality of markings are labelled on the first scale 1421 in a first preset direction.

By way of example, as shown in FIG. 8, the first preset direction is a direction from left to right; makings 20, 10, 0, 10, and 20 are labelled on the first scale 1421 from left to right, with the scale 0 representing a standard distance from the end portions of the macro cameras 121 to the rollers 122 under a certain operating condition; moving 10 units to the left means that the end portions of the macro cameras 121 in FIG. 7 move away from the rollers 122 by ten units, and moving 10 units to the right means that the end portions of the macro cameras 121 in FIG. 7 move close to the rollers 122 by ten units, and so on. Based on the first pointer 14121 and the first scale 1421, the two ends of the macro camera 121 can be adjusted to be at the same distance from the roller 122 without requiring specific skills, so that the whole macro camera 121 is at the same distance from the roller 122, thereby ensuring the optimal test view field of the macro camera 121 for the material belt 130, and further reducing the skill requirements for the on-site installation personnel.

It is to be noted that the distance from the macro camera 121 to the roller 122 can be not a specific value and can be specifically set according to specific operating conditions.

As shown in FIG. 3 and FIG. 7, in some embodiments of the present application, the coating test apparatus 100 further includes a first bolt 150. A connecting seat 1422 is arranged on the base 142; a first connecting hole is formed in the connecting seat 1422; a second connecting hole is formed in the connecting assembly 141; a central connecting line between the first connecting hole and the second connecting hole is parallel to the sliding direction of the connecting assembly 141; and the first bolt 150 connects the first connecting hole with the second connecting hole.

It is to be understood that the first bolt 150 can be screwed to drive the connecting assembly 141 to move the macro camera 121 close to or far away from the roller 122, so as to easily adjust the position of the macro camera 121. In addition, if the first bolt 150 is not screwed, the connecting assembly 141 and the base 142 can be fixed by the first bolt 150 to ensure the fixed position between the connecting assembly 141 and the base 142.

As shown in FIG. 3 and FIG. 7, in some embodiments of the present application, a slide rail is arranged on one of the base 142 and the connecting assembly 141, an extending direction of the slide rail is perpendicular to the axial direction of the roller 122 corresponding to the macro camera 121; and a slide is formed in the other one of the base 142 and the connecting assembly 141 and is in match with the slide rail. By way of example, as shown in FIG. 4 and FIG. 7, it is described by taking the slide rail 1423 arranged on the base 142 and the slide formed in the connecting assembly 141 as an example, the slide rail 1423 and the slide are arranged in a matched mode.

It is to be understood that due to the cooperation between the slide rail 1423 and the slide, a sliding friction force of the connecting assembly 141 on the base 142 can be reduced, and the connecting assembly 141 are prevented from being stuck during sliding; in addition, the connecting assembly 141 can drive the macro camera 121 to move in a specific direction so as to guarantee that the macro camera 121 is adjusted to be at the optimal observation field angle from the material belt 130.

As shown in FIG. 3 and FIG. 7, in some embodiments of the present application, the connecting assembly 141 includes a first connecting member 1411 and a second connecting member 1412. Specifically, the end surface of the macro camera 121 is rotatably connected to the first connecting member 1411, it is to be understood that the macro camera 121 can rotate in the axial direction relative to the first connecting member 1411; and the first connecting member 1411 is connected to the second connecting member 1412, and the second connecting member 1412 is slidably arranged on the base 142.

A second scale 1211 is arranged on one of the end surface of the macro camera 121 and the first connecting member 1411, while a second pointer 14111 is arranged on the other one. By way of example, as shown in FIG. 7, it is described by taking the second scale 1211 arranged on the end surface of the macro camera 121 and the second pointer 14111 arranged on the first connecting member 1411 as an example, the second pointer 14111 is arranged corresponding to the second scale 1211; and it is to be understood that the second pointer 14111 and the second scale 1211 on the macro camera 121 and the first connecting member 1411 can indicate the rotating angle of the macro camera 121 relative to the first connecting member 1411.

As shown in FIG. 7 and FIG. 9, in some embodiments of the present application, a plurality of markings are labelled on the second scale 1211 in a second preset direction.

By way of example, as shown in FIG. 9, the second preset direction is a direction from left to right; makings 15°, 10°, 0°, 10°, and 15° are labelled in an arch shape on the second scale 1211 from left to right, with the scale 0° representing as a standard inclination angle of the end portion of the macro camera 121 relative to the roller 122 under a certain operating condition; taking the rotating direction of the macro camera 121 in FIG. 7 as an example, when rotated counterclockwise by 10°, the second pointer 14111 points to the marking 10° to the right of 0°; and when rotated clockwise by 10°, the second pointer 14111 points to the marking 10° to the left of 0°, and so on. Based on the second pointer 14111 and second scale 1211, the two ends of the macro camera 121 can be adjusted to be at the same inclination angle from the roller 122 without requiring specific skills, so that the whole macro camera 121 is at the same inclination angle from the roller 122, thereby ensuring the optimal test view field of the macro camera 121 for the material belt 130, and further reducing the skill requirements for the on-site installation personnel.

It is to be noted that the inclination angle of the macro camera 121 relative to the roller 122 can be not a specific value and can be specifically set according to specific operating conditions.

As shown in FIG. 7, in some embodiments of the present application, the coating test apparatus 100 can further include a second bolt 160; a fixing hole 14112 is formed in the first connecting member 1411, and the second bolt 160 passes through the fixing hole 14112, is connected to the macro camera 121 and is configured to fix the first connecting member 1411 and the macro camera 121. Specifically, after the inclination angle of the micro camera 121 relative to the roller 122 is set, the second bolt 160 can be inserted into the fixing hole 14112 and connected to the micro camera 121, the second bolt 160 is screwed to enable a friction force large enough to exist between the micro camera 121 and the first connecting member 1411, which prevents the micro camera 121 from rotating relative to the first connecting member 1411, thereby fixing the first connecting member 1411 and the micro camera 121.

In some embodiments of the present application, as shown in FIG. 7, the fixing hole 14112 can be in an arc shape which is in the rotating direction of the macro camera 121, and the second bolt 160 is slidably arranged in the arc-shaped fixing hole 14112. It is to be understood that if it is needed to set the inclination angle of the micro camera 121, the second bolt 160 can be slightly unscrewed, then the micro camera 121 is rotated, at the moment, the second bolt 160 can slide in the arc-shaped fixing hole 14112; and after the inclination angle of the micro camera 121 is set, the second bolt 160 is screwed again to fix the micro camera 121 and the first connecting member 1411. In this way, it is not needed to disassemble the second bolt 160, thus preventing the second bolt 160 from being lost.

In order to adjust the macro camera 121 in the height direction, in some embodiments of the present application, the first connecting member 1411 can be slidably arranged on the second connecting member 1412, with the sliding direction perpendicular to the base 142. The second connecting member 1412 is arranged on the base 142 and cannot move in the height direction, and the first connecting member 1411 can be slidably arranged on the second connecting member 1412 in the direction perpendicular to the base 142 and can drive the macro camera 121 to be adjusted in the height direction.

As shown in FIG. 7, a third scale 14122 is arranged on one of the first connecting member 1411 and the second connecting member 1412, while a third pointer 14113 is arranged on the other one of the first connecting member 1411 and the second connecting member 1412. By way of example, as shown in FIG. 7, it is described by taking the third pointer 14113 arranged on the first connecting member 1411 and the third scale 14122 arranged on the second connecting member 1412 as an example, the third pointer 14113 is arranged corresponding to the third scale 14122. It is to be understood that the third pointer 14113 and the third scale 14122 which are respectively located on the first connecting member 1411 and the second connecting member 1412 that can relatively move are configured to indicate a vertical movement distance of the micro camera 121 relative to the base 142; and on the basis of the movement distance, the two ends of the macro camera 121 can be adjusted to be at the same distance from the roller 122 by the adjusting mechanisms 140 at the two ends of the macro camera 121, so that the whole macro camera 121 is at the same distance from the roller 122, and the optimal observation field of the macro camera 121 on the material belt 130 is guaranteed.

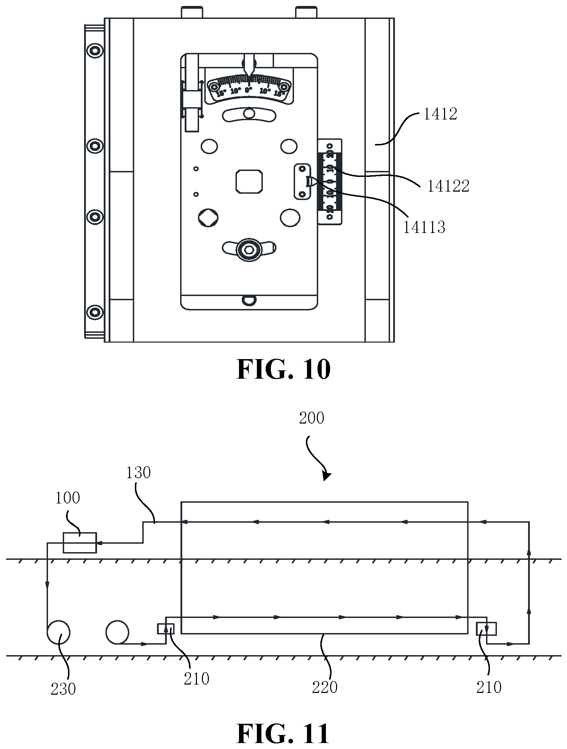

As shown in FIG. 7 and FIG. 10, in some embodiments of the present application, a plurality of markings are labelled on the third scale 14122 in a third preset direction.

By way of example, as shown in FIG. 10, the third preset direction is a direction from up to down; makings 20, 10, 0, 10, and 20 are labelled on the third scale 14122 from up to down, with the scale 0 representing a standard height from the end portion of the macro camera 121 to the roller 122 under a certain operating condition; upwards moving the third pointer 14113 on the first connecting member 1411 by 10 units means that the macro camera 121 in FIG. 7 raises relative to the roller 122 by ten units, and moving downwards by 10 units means that the end portion of the macro camera 121 in FIG. 7 is lowered relative to the roller 122 by ten units, and so on. Based on the third pointer 14113 and the third scale 14122, the two ends of the macro camera 121 can be adjusted to be at the same height from the roller 122 without requiring specific skills, so that the whole macro camera 121 is at the same height from the roller 122, thereby ensuring the optimal test view field of the macro camera 121 for the material belt 130, and further reducing the skill requirements for the on-site installation personnel.

It is to be noted that the height of the macro camera 121 relative to the roller 122 can be not a specific value and can be specifically set according to specific operating conditions.

As shown in FIG. 7, in some embodiments of the present application, the coating test apparatus 100 further includes a third bolt 170; a third connecting hole is formed in the first connecting member 1411, and a fourth connecting hole is formed in the second connecting member 1412; a center connecting line between the third connecting hole and the fourth connecting hole is perpendicular to the base 142; and the third bolt 170 connects the third connecting hole with the fourth connecting hole.

It is to be understood that the third bolt 170 can be screwed to drive the first connecting member 1411 to adjust the micro camera 121 in a height direction. In addition, if the third bolt 170 is not screwed, the first connecting member 1411 and the second connecting member 1412 can be fixed by the third bolt 170 to ensure the fixed position between the first connecting member 1411 and the second connecting member 1412.

The present application is more than that, as shown in FIG. 3 and in cooperation with FIG. 4, in some embodiments of the present application, the main support 110 is provided with a first platform 181 and a second platform 182 which are arranged in parallel and stacked from bottom to top; the two test assemblies 120 are respectively arranged on the first platform 181 and the second platform 182, and the rollers 122 in the two test assemblies 120 are arranged in a staggered manner, and vertical tangent planes of the rollers 122 in the two test assemblies 120 are located on the same vertical plane. The two rollers 122 are arranged in the staggered manner, such that two micro cameras 121 can be conveniently assembled corresponding to two surfaces of the material belt 130. The vertical tangent planes of the two rollers 122 are located on the same lead hammer face, which avoids the interference of the material belt 130 with the positions of the micro cameras 121, makes the whole coating test apparatus 100 more compact, and reduces the space occupied by the coating test apparatus 100.

As shown in FIG. 3, an avoidance port 1811 is formed in the second platform 181 and configured for the material belt 130 to pass through.

As shown in FIG. 3, in some embodiments of the present application, the coating test apparatus 100 further includes an encoder assembly 183 which is arranged on the main support 110 and configured to provide a signal for triggering the macro cameras 121 to work, and the specific working principle can refer to the existing technology and will not be listed here.

As shown in FIG. 3, in the present application, the coating test apparatus 100 can also include a roller holder 1221 which is arranged on the main support 110; and the roller 122 is arranged on the roller holder 1221; and the roller holder 1221 can be configured to support and fix the roller 122 so as to guarantee the stability of the roller 122 during operating.

As shown in FIG. 3 and FIG. 4, in some embodiments of the present application, the coating test apparatus 100 can further include mounting feet 190; and the mounting feet 190 are arranged at the bottom of the main support 110 and are configured to fix the main support 110 on a target object (such as the ground, or a certain object). During the operating of the coating test apparatus 100, vibration is unavoidable; the mounting feet 190 can be configured to fix the main support 110 on the target object so that the shaking of the coating test apparatus 100 is reduced and vibration abnormal sounds are reduced.

According to some embodiments of the present application, the coating test apparatus 100 is provided. The coating test apparatus 100 includes the main support 110, the two test assemblies 120 (the macro cameras 121 and the rollers 122), the adjusting mechanisms 140 located at the two ends of the macro cameras 121, the encoder assembly 183 arranged on the main support 110, the roller holders 1221, and the mounting feet 190 located at the bottom of the main support 110. The macro cameras 121 are erected on the main support 110, and therefore installation of the camera supports can be avoided; meanwhile, installation of the light source assembly can be avoided, and therefore arrangement of wires can be reduced; in addition, the test assemblies 120 are assembled compactly, so that the space occupied by the coating test apparatus 100 can be reduced. The coating test apparatus 100 includes the two test assemblies 120, each test assembly 120 includes one macro camera 121 and the corresponding roller 122, the macro camera 121 is arranged corresponding to the roller 122, the width of the lens of each macro camera 121 is greater than or equal to the width of the corresponding roller 122, therefore, it is applicable to test of the material belts 130 with various widths; and in addition, the adjustment and debugging on the macro cameras 121 can be reduced, thus the on-site installation workload and on-site installation personnel are decreased, and moreover, the requirement for the skill levels of the on-site installation and debugging personnel can be reduced.

The embodiments of the present application also provide a coating system 200; FIG. 11 is a schematic diagram of the coating system 200 provided by one embodiment of the present application, as shown in FIG. 11, the coating system 200 provided by the embodiment of the present application includes coating apparatuses 210, a drying oven apparatus 220, a material recovery apparatus 230, and the coating test apparatus 100 described as above; and the coating test apparatus 100 is arranged between the coating apparatuses 210 and the material recovery apparatus 230.

Specifically, in one embodiment, as shown in FIG. 11, the arrow direction in the figure is the conveying direction of the material belt 130; as the material belt 130 passes through the first coating apparatus 210, the coating apparatus 210 coat the first surface 1301 of the material belt 130, and then the material belt 130 enters the drying oven apparatus 220 to be dried; then the material belt 130 passes the second coating apparatus 210, and the second surface 1302 of the material belt 130 is coated; then the material belt 130 enters the drying oven apparatus 220 to be dried; the material belt 130 is then conveyed to the coating test apparatus 100 to be subjected to coating effect test; and finally, the material belt 130 is collected by the material recovery apparatus 230.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A coating test apparatus, comprising a main support and two test assemblies assembled on the main support; wherein
each test assembly comprises: a macro camera and a roller; the roller is configured to convey a material belt; the two test assemblies are respectively configured to test two opposite surfaces of the material belt; and
the macro camera in each test assembly is arranged corresponding to the roller, and a width of a lens of the macro camera is greater than or equal to the width of the corresponding roller.

2. The coating test apparatus according to claim 1, wherein adjusting mechanisms are respectively arranged at two ends of the macro camera and are configured to adjust the two ends of the macro camera to be at the same distance, the same height, and the same inclination angle from the corresponding roller.

3. The coating test apparatus according to claim 2, wherein the adjusting mechanisms are electronic adjusting mechanisms, or manual adjusting mechanisms.

4. The coating test apparatus according to claim 3, wherein the manual adjusting mechanism comprises a connecting assembly and a base; the connecting assembly is connected to the end surface of the macro camera;
the base is arranged on the main support; the connecting assembly is slidably arranged on the base, with a sliding direction perpendicular to an axial direction of the roller corresponding to the macro camera;
a first scale are arranged on one of the base and the connecting assembly, while a first pointer is arranged on the other one of the base and the connecting assembly and is corresponding to the first scale; and the first pointer and the first scale are configured to indicate a sliding distance of the connecting assembly on the base.

5. The coating test apparatus according to claim 4, wherein a plurality of markings are labelled on the first scale in a first preset direction.

6. The coating test apparatus according to claim 4, further comprising: a first bolt, wherein
a connecting seat is arranged on the base; a first connecting hole is formed in the connecting seat; a second connecting hole is formed in the connecting assembly; a central connecting line between the first connecting hole and the second connecting hole is parallel to the sliding direction of the connecting assembly; and the first bolt connects the first connecting hole with the second connecting hole.

7. The coating test apparatus according to claim 4, wherein a slide rail is arranged on one of the base and the connecting assembly, an extending direction of the slide rail is perpendicular to the axial direction of the roller corresponding to the macro camera; and a slide is formed in the other one of the base and the connecting assembly and is in match with the slide rail.

8. The coating test apparatus according to any one of claims 4 to 7, wherein the connecting assembly comprises a first connecting member and a second connecting member;
the end surface of the macro camera is rotatably connected to the first connecting member, the first connecting member is connected to the second connecting member, and the second connecting member is slidably arranged on the base;
a second scale is arranged on one of the end surface of the macro camera and the first connecting member, while a second pointer is arranged on the other one of the end surface of the macro camera and the first connecting member and is corresponding to the second scale; and the second pointer and the second scale are configured to indicate a rotating angle of the macro camera relative to the first connecting member.

9. The coating test apparatus according to claim 8, wherein a plurality of markings are labelled on the second scale in a second preset direction.

10. The coating test apparatus according to claim 8, further comprising a second bolt, wherein
a fixing hole is formed in the first connecting member, and the second bolt passes through the fixing hole and is connected to the macro camera.

11. The coating test apparatus according to claim 10, wherein the fixing hole is in an arc shape, and the second bolt is slidably arranged in the fixing hole.

12. The coating test apparatus according to claim 8, wherein the first connecting member is slidably arranged on the second connecting member, with the sliding direction perpendicular to the base;
a third scale is arranged on one of the first connecting member and the second connecting member, while a third pointer is arranged on the other one of the first connecting member and the second connecting member and is corresponding to the third scale; and the third pointer and the third scale are configured to indicate a vertical movement distance of the micro camera relative to the base.

13. The coating test apparatus according to claim 12, wherein a plurality of markings are labelled on the third scale in a third preset direction.

14. The coating test apparatus according to claim 12, further comprising: a third bolt, wherein a third connecting hole is formed in the first connecting member, and a fourth connecting hole is formed in the second connecting member; a center connecting line between the third connecting hole and the fourth connecting hole is perpendicular to the base; and the third bolt connects the third connecting hole with the fourth connecting hole.

15. The coating test apparatus according to any one of claims 1 to 7, wherein the main support is provided with a first platform and a second platform which are arranged in parallel and stacked from bottom to top; the two test assemblies are respectively arranged on the first platform and the second platform; and
the rollers in the two test assemblies are arranged in a staggered manner, and vertical tangent planes of the rollers in the two test assemblies are located on the same vertical plane.

16. The coating test apparatus according to claim 15, wherein an avoidance port is formed in the second platform and configured to avoid the material belt.

17. The coating test apparatus according to any one of claims 1 to 7, further comprising an encoder assembly which is arranged on the main support and configured to provide a signal for triggering the macro cameras to work.

18. The coating test apparatus according to any one of claims 1 to 7, further comprising a roller holder, wherein
the roller holder is arranged on the main support; and the roller is arranged on the roller holder.

19. The coating test apparatus according to any one of claims 1 to 7, further comprising mounting feet, wherein
the mounting feet are arranged at the bottom of the main support and are configured to fix the main support on a target object.

20. A coating system, comprising coating apparatuses, a drying oven apparatus, a material recovery apparatus, and the coating test apparatus according to any one of claims 1 to 19, wherein
the coating test apparatus is arranged between the coating apparatuses and the material recovery apparatus.
